# EUROPEAN PATENT APPLICATION

(11) **EP 2 608 005 A2**
(43) Date of publication of application: **26.06.2013**
(21) Application number: 12198002.3
(22) Date of filing: 19.12.2012
(51) Int. Cl.: G06F 3/0481

(54) **Apparatus and method for editting screen in wireless terminal**

(30) Priority: 21.12.2011 KR 20110139389
(71) Applicant: Samsung Electronics Co., Ltd, Gyeonggi-do 443-742 (KR)
(72) Inventor: Jung, Hae-Bin, 443-742 Gyeonggi-do (KR)
(74) Representative: Hutter, Jacobus Johannes

(57) **Abstract**

A screen editing apparatus and method capable of editing a background screen in a wireless terminal, the apparatus including: a display unit for displaying a fixed area selected by a user on a background screen; and a controller for controlling the display unit to display the fixed area selected by the user on the background screen. Inside the fixed area, application widgets are displayed, for example the most commonly used applications. The user can thus easily access the most commonly used applications.

## Description

### BACKGROUND OF THE INVENTION

### Field of the Invention

The present invention relates generally to an apparatus and method for editing a screen in a wireless terminal, and more particularly, to a screen editing apparatus and method capable of editing a background screen in a wireless terminal.

### Description of the Related Art

A background screen is displayed during a standby mode of a wireless terminal, and icons or application widgets indicating their applications are displayed on the background screen. With "application widget" or, for short, application, is meant an icon, widget, or application shortcut, that serves as a user interface element for selecting an application or widget.

The standby mode of a wireless terminal generally includes a plurality of initial screens which can be navigated using a user's finger gesture, and the background screen is displayed on the plurality of initial screens with application widgets selectable by a user. Each of the plurality of initial screens displays a set of application widgets from a plurality of such sets.

As described above, application widgets or icons indicating their corresponding applications are displayed on each of the plurality of initial screens during the standby mode of a wireless terminal, causing a user to inconveniently search for a desired application by changing the initial screens to find a corresponding initial screen containing the desired application.

### SUMMARY OF THE INVENTION

An aspect of the present invention is to provide a screen editing apparatus and method capable of editing a background screen in a wireless terminal so that a fixed area can be defined.

An aspect of the present invention is thus to provide a screen editing apparatus and method capable of always displaying the fixed area selected by a user on a predetermined portion of a background screen regardless of which initial screen is being displayed on a portable terminal.

According to one aspect of the present invention, there is provided an apparatus for editing a screen in a wireless terminal, including: a display unit for displaying a fixed area selected by a user on a background screen; and a controller for controlling the display unit to display the fixed area selected by the user on the background screen regardless of which mode of initial screen the terminal is currently on, wherein the fixed area includes a number of application widgets preselected by a user.

According to another aspect of the present invention, there is provided a method of editing a screen in a wireless terminal, including: displaying a background screen in a standby mode of the wireless terminal; and displaying a fixed area selected by a user on the background screen, and providing a number of desired applications or widgets in the fixed area so that the desired applications or widgets can be always shown at a preselected portion of the background regardless of which initial screen is being displayed on the terminal.

Further embodiments of the invention are described in reference to the figures and described in the attached claims. Various embodiments of the invention can be combined to form further embodiments of the invention.

### BRIEF DESCRIPTION OF THE DRAWINGS

The above features and advantages of the present invention will become more apparent from the following detailed description when taken in conjunction with the accompanying drawing in which:
FIG. 1 is a block diagram of a wireless terminal according to an embodiment of the present invention;
FIG. 2 is a flowchart illustrating a process of setting a fixed area on a background screen in a wireless terminal, according to an embodiment of the present invention; and
FIGs. 3A - 3E are illustrative diagrams for describing setting a fixed area displayed on a background screen in a wireless terminal according to an embodiment of the present invention.

### DETAILED DESCRIPTION

Preferred embodiments of the present invention will be described herein below with reference to the accompanying drawings. Like reference numbers are used to refer to like elements through at the drawings.

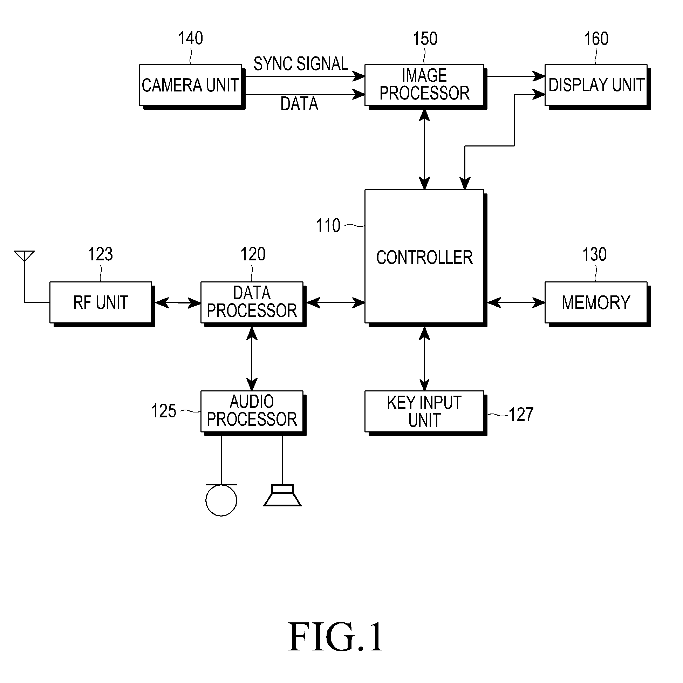

FIG. 1 is a block diagram of a wireless terminal according to an embodiment of the present invention.

In operation, a Radio Frequency (RF) unit 123 performs a wireless communication function of the wireless terminal. The RF unit 123 includes an RF transmitter for up-converting a frequency of a transmission signal and amplifying the up-converted transmission signal, and an RF receiver for low-noise amplifying a received signal and down-converting a frequency of the amplified received signal. A data processor 120 includes a transmitter for coding and modulating the transmission signal and a receiver for demodulating and decoding the received signal. In other words, the data processor 120 may include a modem and a codec. The codec includes a data codec for processing packet data and the like, and an audio codec for processing an audio signal such as voice. An audio processor 125 plays a received audio signal output from the audio codec in the data processor 120 and transfers a transmission audio signal picked up by a microphone to the audio codec in the data processor 120.

A key input unit 127 includes alphanumeric keys for inputting alphanumeric information and function keys for setting various functions.

A memory 130 may include a program memory and a data memory. The program memory may store programs for controlling a general operation of the wireless terminal. In addition, according to an embodiment of the present invention, the program memory may store programs for controlling a display unit 160 to display a fixed area selected by a user on a background screen of the wireless terminal and display application widgets selected by the user in the fixed area. The data memory may temporarily store data generated while the programs are executed.

In addition, the memory 130 stores position information of the fixed area selected by the user in a background screen area editing mode according to an embodiment of the present invention.

A controller 110 controls the overall operation of the wireless terminal.

According to an embodiment of the present invention, when an image to be selected as a background image is selected in a background screen setting mode, and in response, the controller 110 switches to the background screen area editing mode and performs a control so that an area selected by the user from the image is set as a fixed area. For selection by the user, the screen is displayed as a plurality of areas during the background screen area editing mode, so that the user can select the desired screen by touch.

In addition, the controller 110 performs a control so that application widgets selected by the user from a plurality of applications of the wireless terminal are set as application widgets of the fixed area in the background screen area editing mode. In the fixed area, the applications may be displayed as icons.

In addition, the controller 110 controls the display unit 160 to display the image selected in the background screen setting mode as a background screen in a standby mode of the wireless terminal, display the fixed area set in the background screen area editing mode on the background screen, and display the selected application widgets within the fixed area, so that the fixed area containing the selected application widgets is always shown during any of the idle mode or during a display of any of the initial screen. That is, when the standby mode of the wireless terminal includes a plurality of initial screens on which the background screen is displayed, the controller 110 may display the fixed area in which the selected application widgets are to be displayed every time the wireless terminal moves to any of the initial screens.

In an embodiment, each of the plurality of initial screens display, outside the fixed area, application widgets from a set of application widgets corresponding to that initial screen. That is, for each initial screen a (different) set of application widgets is provided. However, the fixed area in each initial screen will display the same application widgets.

Further, when the selected application widgets are displayed on the background screen from among a plurality of application widgets of the wireless terminal, the controller 110 may display the selected application widgets in the fixed area.

Moreover, when an application is downloaded in the wireless terminal, the controller 110 may download and display the downloaded application as an application widget in the fixed area. This can be subject to a user preference.

Furthermore, when the number of application widgets displayed in the fixed area on the background screen exceeds the allowable displayable number of applications in the standby mode of the wireless terminal, the controller 110 may perform a control so that a size of the fixed area is variably changed.

Alternatively or additionally, the controller may be configured so that one or more application widgets corresponding to applications with a least frequency of use by the user may be deleted to accommodate a new application widget to be displayed in the fixed area.

A camera unit 140 includes a camera sensor for capturing image data and converting the captured optical signal into an electrical signal, and a signal processor for converting an analog image signal captured by the camera sensor into digital data. The camera sensor is assumed herein to be a Charge-Coupled Device (CCD) or Complementary Metal Oxide Semiconductor (CMOS) sensor, and the signal processor may be realized by a Digital Signal Processor (DSP). The camera sensor and the signal processor may be realized in an integrated manner or in a separated manner.

An image processor 150 performs Image Signal Processing (ISP) for displaying image signals output from the camera unit 140 on the display unit 160, and the ISP performs functions such as gamma correction, interpolation, spatial variation, image effects, image scaling, Automatic White Balance (AWB), Automatic Exposure (AE), and Automatic Focusing (AF). The image processor 150 processes the image signals output from the camera unit 140 on a frame basis, and outputs the frame-based image data according to the characteristics and size of the display unit 160. The image processor 150, which includes a video codec, compresses frame image data displayed on the display unit 160 by preset coding, and restores (or decompresses) the compressed frame image data into its original frame image data. The video codec may include a JPEG codec, MPEG4 codec, Wavelet codec, etc. Assuming that the image processor 150 includes an On-Screen Display (OSD) function, the controller 110 may control the image processor 150 to output OSD data according to the size of a screen on which the data is displayed.

The display unit 160 displays an image output from the image processor 150 and user data output from the controller 110 on a screen. The display unit 160 may include a Liquid Crystal Display (LCD), and in this case, the display unit 160 includes an LCD controller, a memory for storing image data, and an LCD panel. When the LCD functions as an input unit by being realized in a touch screen scheme, the LCD may serve as an input unit with a touch screen, and in this case, the display unit 160 may display the alphanumeric keys of the key input unit 127.

In addition, according to an embodiment of the present invention, the display unit 160 displays a fixed area on a background screen during the standby mode of the wireless terminal and displays application widgets in the fixed area.

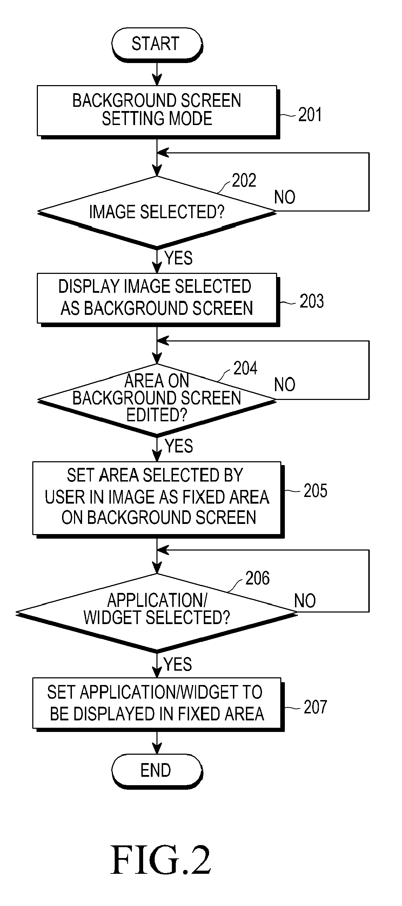

Hereinafter, an operation of setting a fixed area on a background screen in such a wireless terminal described above is described in detail with reference to FIGs. 2 to 3E.

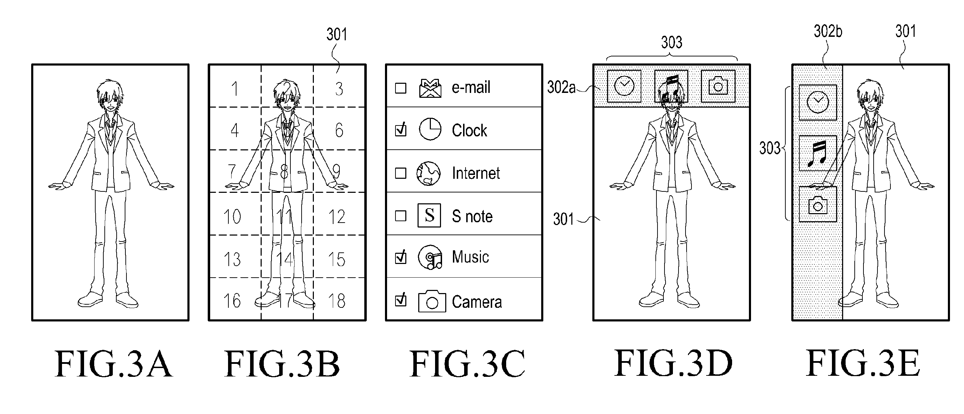

FIG. 2 is a flowchart illustrating a process of setting a fixed area on a background screen in a wireless terminal according to an embodiment of the present invention, and FIGs. 3A - 3E are illustrative diagrams for describing setting a fixed area displayed on a background screen in a wireless terminal according to an embodiment of the present invention.

Hereinafter, the embodiment is described in detail with reference to FIG. 1.

Referring to FIG. 2, if a specific image to be used as a background screen is selected from among a plurality of images stored in the wireless terminal in step 201, i.e., in the background screen setting mode of the wireless terminal, the controller 110 detects this request in step 202 and proceeds to step 203 to display the image selected as the background screen. FIG. 3A shows the image selected as the background screen.

If area editing of the background screen is selected while displaying the image selected as the background screen in step 203, the controller 110 detects this in step 204 and switches to the background screen area editing mode. In the background screen area editing mode, the controller 110 divides the image selected as the background screen into a plurality of areas. FIG. 3B shows the image selected as the background screen, which is divided into the plurality of areas in the background screen area editing mode. The display provides visual markers, such as lines, to indicate the division of the main display area into a plurality of areas (labelled 1-18, in figure 3B). If at least one specific area is selected in the image selected as the background screen, which is divided into the plurality of areas, through a touch operation of the user, the controller 110 detects this and proceeds to step 205 to set the selected at least one specific area as a fixed area on the background screen. If the action of setting of application widgets to be displayed in the fixed area is selected, the controller 110 detects this in step 206 and displays a plurality of application widgets stored in the wireless terminal.

If at least one of the plurality of application widgets of the wireless terminal is selected, the controller 110 detects this and proceeds to step 207 to set the selected at least one application/widget as an application/widget to be displayed in the fixed area.

In FIG. 3B, if areas 1 through 3 are selected as fixed areas of the background screen from among the plurality of areas 1 through 18 of the image selected as the background screen through the touch operation of the user, and in FIG.3C, the selection of an alarm application, a music application, and a camera application from among the plurality of applications is completed, then a background screen 301 in which fixed areas 302a are set is displayed on an initial screen of a standby mode of the portable terminal, as shown in FIG. 3D. As shown in FIG. 3D, the selected image is displayed as the background screen 301 on the initial screen, and icons 303 indicating the alarm application, the music application, and the camera application, respectively, are displayed on the fixed areas 302a set by the user on the background screen 301.

In FIG. 3B, if areas 1, 4, 7, 10,13 and 16 are selected as fixed areas of the background screen from among the plurality of areas 1 through 18 of the image selected as the background screen through the touch operation of the user, and in FIG. 3C, the selection of an alarm application, a music application, and a camera application from among the plurality of applications is completed, then the background screen 301 in which the fixed areas 302b are set is displayed on an initial screen of the standby mode of the portable terminal, as shown in FIG. 3E. As shown in FIG. 3E, the selected image is displayed as the background screen 301 on the initial screen, and the icons 303 indicating the alarm application, the music application, and the camera application, respectively, are displayed on the fixed areas 302b set by the user on the background screen 301.

When a fixed area is set on a background screen through the process of FIG. 2, in the standby mode of the wireless terminal, an image selected as the background screen is displayed, and the fixed area selected by the user is displayed at a specific position of the image of the background screen set by the user while and the selected application widgets desired by the user is always displayed within the selected area and location of the display screen.

In reference to figure 2, the selection of the background image to be displayed has been described together with the selection of the fixed area. However, it is not essential to make these selections one after the other. In fact, the invention can also be practised using a default or even empty background screen image.

The fixed area, selected and defined by the user, is always displayed on the background screen, and when the standby mode of the wireless terminal includes a plurality of initial screens on which the background screen is displayed, application widgets in the fixed area are displayed every time any of the plurality of initial screens is displayed.

In operation, when one of a plurality of application widgets of the wireless terminal is selected and thereafter the user changes, the controller 110 displays the application/widget in the fixed area on the next background screens so that the fixed area containing the selected application widgets is always shown.

Further, when it is selected that an application is downloaded to the wireless terminal and if the user selects the downloaded application to be in the fixed area, the controller 110 downloads and displays the application in the fixed area of the background screen.

Moreover, when it is selected that an application/widget is displayed or downloaded in the fixed area of the background screen, if the number of application widgets exceeds allowable displayable number of application widgets in the fixed area, the controller 110 may change variably a size of the fixed area to accommodate all the selected application widgets within the fixed area. Alternatively, when the number of application widgets exceeds the allowable displayable number of application widgets in the fixed area, the controller 110 may delete an application/widget with a least frequent use by the user to accommodate more popular application/widgets.

As is apparent from the foregoing description, the proposed apparatus and method for editing a screen in a wireless terminal to always display a fixed area selected by a user on a background screen allow the user to set the fixed area at a desired position on the background screen and to always view the desired application widgets through the fixed area during the standby mode of the wireless terminal regardless of which background screen is selected

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments, such as a wireless terminal, thereof, it will be understood by those skilled in the art that various changes in form and details may be made therein without departing from the spirit and scope of the invention as defined by the appended claims and their equivalents.

## Claims

1. An apparatus for editing a screen in a wireless terminal, **characterized by**:
a display unit (160) for displaying a fixed area defined during a background screen editing mode; and
a controller (110) adapted to control the display unit (160) to display the fixed area(302a, 302b) with a desired plurality of application widgets on the background screen(301).

2. The apparatus of claim 1, wherein the controller (110) is adapted to performs a control so that an area defined in the background screen(301) during the background screen area editing mode is set as the fixed area(302a, 302b) to be displayed during any of background screen modes.

3. The apparatus of claim 1, wherein the controller (110) is adapted to performs a control so that an area defined in the background screen(301) during a background screen area editing mode is set as the fixed area containing the plurality of application widgets, so that the selected application widgets are displayed in the fixed area(302a, 302b) during any of background screen modes.

4. The apparatus of any of the preceding claims, **characterized in that** when a standby mode of the wireless terminal includes a plurality of initial screens on which the background screen (301) is displayed, the controller (110) is adapted to display the fixed screen every time the wireless terminal moves to any of the plurality of initial screens.

5. The apparatus of any of the preceding claims, **characterized in that** the controller (110) is adapted to control the display unit (160) to display at least one of the plurality of application widgets of the wireless terminal in the fixed area (302a, 302b) on the background screen (301).

6. The apparatus of any of the preceding claims, **characterized in that** when an application is downloaded to the wireless terminal, the controller (110) is adapted to perform a control so that the application is downloaded and displayed in the fixed area (302a, 302b) on the background screen (301).

7. The apparatus of any of the preceding claims, **characterized in that** the controller (110) is adapted to perform a control so that a size of the fixed area (302a, 302b) is variably changed according to the number of applications displayed in the fixed area (302a, 302b), or the number of applications displayed in the fixed area (302a, 302b) is selectively changed based on a user frequency.

8. A method of editing a screen in a wireless terminal, **characterized by**:
displaying a background screen (301) in a standby mode of the wireless terminal; and
displaying the fixed area (302a, 302b) of the background screen (301) with the selected application widgets selected during a background screen area editing mode.

9. The method of claim 8, further comprising:
selecting an image to be displayed on the background screen (301) in the background screen area editing mode; and
setting an area defined in the image of the background screen as the fixed area on the background screen.

10. The method of claim 8 or 9, further comprising:
if an application in the fixed area (302a, 302b) is selected after the fixed area (302a, 302b) on the background screen (301) is set, displaying a plurality of applications ;
if at least one of the plurality of applications is selected, setting the selected application as an application to be displayed in the fixed area (302a, 302b) of the background screen (301) during any of background screen modes.

11. The method of any of the claims 8-10, **characterized in that** when a standby mode of the wireless terminal includes a plurality of initial screens on which the background screen (301) is displayed, the fixed area is displayed every time the wireless terminal moves to any of the plurality of initial screens.

12. The method of any of the claims 8-11, further comprising, when at least one of a plurality of applications is selected to be displayed on the background screen (301), if the fixed area (302a, 302b) on the background screen (301) is selected, displaying the selected application in the fixed area (302a, 302b) on the background screen (301).

13. The method of any of the claim 8-12, further comprising, when an application is downloaded to the wireless terminal, if the fixed area (302a, 302b) on the background screen (301) is selected, downloading and displaying the application in the fixed area (302a, 302b) on the background screen (301).

14. The method of any of the claims 8-13, **characterized in that** a size of the fixed area (302a, 302b) is variably changed according to the number of applications displayed in the fixed area (302a, 302b) or the number of applications displayed in the fixed area (302a, 302b) is selectively changed based on a user frequency.
